# EUROPEAN PATENT SPECIFICATION

(11) **EP 2 541 882 B1**
(45) Date of publication and mention of the grant of the patent: **01.08.2018**
(21) Application number: 11171469.7
(22) Date of filing: 27.06.2011
(51) Int. Cl.: H04M 1/725, H04M 1/60, H04B 1/38

(54) **Transmitting radio signals between a headset and a base station**
Übertragen von Funksignalen zwischen einem Kopfhörer und einer Basisstation
Transmission de signaux radio entre un casque et une station de base

(43) Date of publication of application: 02.01.2013
(73) Proprietor: GN Audio A/S, 2750 Ballerup (DK)
(72) Inventor: Larsen, Leo, DK-2980 Kokkedal (DK)
(74) Representative: Zacco Denmark A/S

(56) References cited:
- EP-A1- 1 699 211
- WO-A1-2005/064964
- WO-A2-02/19666
- US-A1- 2011 053 509
- Gn Netcom: "Jabra Pro 9460,9460-Duo and 9470", , 31 December 2009 (2009-12-31), XP55013692, http://dfpcorec-p/wf/web/citenpl/citenpl.h tml?_url=http%3A%2F%2Fheadsetplus.com%2FPD F%2F9460_9470_Manual.pdf Retrieved from the Internet: URL:http://headsetplus.com/PDF/9460_9470_M anual.pdf [retrieved on 2011-12-01]

## Description

### Technical Field

The invention relates to a headset system comprising a headset and a base station and to the transmission of radio signals between the headset and the base station according to a wireless communication protocol.

### Background

Today standard telephones are rapidly being replaced by wireless headsets. A wireless headset typically communicates with a base station by the transmission of radio signals between the headset and the base station. Thus a headset system can be said to comprise a headset and a base station. The base station may be connected to e.g. a telephone line or a computer having a communication program such as Microsoft Office Communicator installed. The wireless communication between the headset and the base station of a headset system may use any of a number of different wireless communication protocols, such as Digital Enhanced Cordless Telecommunications (DECT), Bluetooth, Wireless Fidelity (WiFi), or Ultra Wideband (UWB). At present DECT seems to be the most widely used wireless communication protocol for this application.

In e.g. office environments and call centres, i.e. so-called high density installations, a large number of headset systems, each one comprising a headset and a base station, will typically be used within a limited geographical area. This is possible because each of the wireless communication protocols has a certain bandwidth allowing a given number of channels to be used simultaneously. As an example, in Europe the DECT frequency band is 1880 MHz - 1900 MHz, which allows the use of 10 carriers with 12 time slots to be used in each direction, i.e. up and down stream. Thus up to 120 channels can be provided in the European DECT spectrum, which means that up to 120 headset systems can be used simultaneously in the same area. In the US and Canada the DECT frequency band is 1920 MHz - 1930 MHz, which allows the use of 5 carriers and provides up to 60 channels.

Although some of the other wireless communication protocols, e.g. Bluetooth, may provide a somewhat higher number of channels, the number is still limited to a level that may not be enough for large office buildings or large call centres. On top of this, the increased use of wide band speech in e.g. Microsoft Office Communicator further reduces the number of available channels, since a higher bandwidth is needed for each channel. Thus in Europe the number of available DECT wideband channels is only 60, while in the US and Canada it is reduced to 30.

WO 2005/064964 discloses an integrated network system. The system includes a keypad, microphone, loudspeaker, and a wired network interface for connecting to a wired network to receive and transmit data. The integrated network device also includes a wireless protocol interface for receiving, transmitting, and processing data. The integrated network device further includes a wireless protocol interface for receiving, transmitting, and processing voice communications.

US 2011/053509 discloses a modular dual radio headset. In one example, a headset system includes a secondary radio module and a headset module. The secondary radio module may be removably coupled to the headset module.

GN Netcom: "Jabra Pro 9460, 9460-Duo and 9470", discloses a headset with a base station that utilizes DECT to connect with a headset and Bluetooth to connect to a mobile phone.

WO 2002/019666 discloses an electronic portable communications terminal for Internet telephony and comprises communications means for wireless near field communication of received and transmission data with a connecting unit adapted to establish a connection to a network and/or the Internet. Said terminal additionally comprising protocol means adapted to handle/control communication of said received and transmission data in accordance with a TCP/IP protocol in connection with said wireless near field communication.

EP 1 699 211 discloses a headset. The headset comprises an input section converting a sound to a first signal; a processing section processing said first signal and transmitting a first processed signal to the communication device, and receiving a second signal from said communication device and processing said second signal into a second processed signal. The processing section comprises an adaptation means determining environmental acoustic data from the first and/or second signal and selecting a signal processing setting for the processing section in accordance with the environmental acoustic data.

### Summary

Therefore, it is an object of embodiments of the invention to provide a headset system that allows an increased number of channels to be used simultaneously. The invention is as set out in the independent claims 1, 6, 9 and 10, preferred forms being set out in dependent claims 2 to 5, 7 and 8. According to embodiments of the invention the object is achieved in a headset system comprising a headset and a base station, wherein each of said headset and base station comprises a transceiver configured to transmit radio signals between said headset and said base station according to a first wireless communication protocol. The object is achieved when each of said headset and base station further comprises a transceiver configured to transmit radio signals between said headset and said base station according to a second wireless communication protocol; and at least one of said headset and said base station further comprises selecting means configured to select one of said first and second wireless communication protocols for transmission of radio signals between said headset and said base station. When the headset as well as the base station have transceivers for two different wireless communication protocols and one of these can be selected for transmission it means that the combined number of channels can be used, and that the protocol best suited for a given transmission can be chosen.

In one embodiment, the selecting means is configured to select said first or second wireless communication protocol in dependence of available transmission capacity for transmission of radio signals according to said first and second wireless communication protocols.

The selecting means may further be configured to determine whether transmission capacity is available for transmission of radio signals between the headset and the base station according to said first wireless communication protocol; select, if such capacity is available, said first wireless communication protocol for transmission of radio signals between said headset and said base station; and select, if such capacity is not available, said second wireless communication protocol for transmission of radio signals between said headset and said base station. In this way the channels of the first wireless communication protocol are used first and when these are all in use the channels of the second wireless communication protocol can then be used.

Each of the first and second wireless communication protocols may be selected from the group of wireless communication protocols comprising DECT (Digital Enhanced Cordless Telecommunications), Bluetooth, WiFi (Wireless Fidelity) and UWB (Ultra Wideband). In one embodiment, the first wireless communication protocol is DECT, and the second wireless communication protocol is Bluetooth.

When at least one of said headset and said base station further comprises a digital signal processor configured to perform digital signal processing of signals to be transmitted according to said first wireless communication protocol as well as signals to be transmitted according to said second wireless communication protocol, i.e. a common digital signal processor is used for both protocols, it becomes possible also to use a codec for encoding and decoding the signals for both protocols.

Some embodiments of the invention also relate to a method of transmitting radio signals between a headset and a base station according to a wireless communication protocol. The method comprises the steps of determining whether transmission capacity is available for transmission of radio signals between said headset and said base station according to a first wireless communication protocol; transmitting, if such capacity is available, radio signals between said headset and said base station according to said first wireless communication protocol; and transmitting, if such capacity is not available, radio signals between said headset and said base station according to a second wireless communication protocol.

Embodiments corresponding to those mentioned above for the headset system also apply for the method.

Some embodiments of the invention relate to a computer program and a computer readable medium with program code means for performing the method described above.

### Brief Description of the Drawings

Embodiments of the invention will now be described more fully below with reference to the drawings, in which
Figures 1a and 1b show an example of a headset system comprising a headset and a base station;
Figure 2 illustrates an office environment or a call centre with a large number of headset systems;
Figure 3 shows an example configuration of the headset of Figures 1a and 1b;
Figure 4 shows an example configuration of the base station of Figures 1a and 1b;
Figure 5 shows an example configuration of a headset configured to transmit and receive radio signals according to two different wireless communication protocols;
Figure 6 shows an example configuration of a base station configured to transmit and receive radio signals according to two different wireless communication protocols; and
Figure 7 shows a flow chart of a method of transmitting radio signals between a headset and a base station.

### Detailed Description of Embodiments

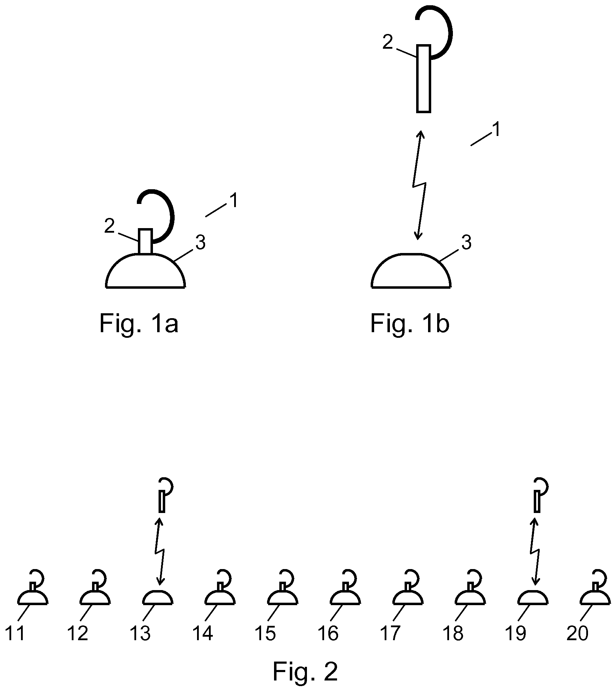

Figures 1a and 1b show an example of a headset system 1 in which the invention may be used. The headset system 1 comprises a headset 2 and a base station or base unit 3. In Figure 1a the headset system is shown in a passive state in which the headset 2 is placed in the base station 3. In Figure 1b the headset 2 has been moved away from the base station 3, and a connection has been established between the headset 2 and the base station 3 by transmitting radio signals between them. The transmitted radio signals may represent sound (speech), data or control signals. The wireless communication between the headset 2 and the base station 3 may use any of a number of different wireless communication protocols, such as Digital Enhanced Cordless Telecommunications (DECT), Bluetooth, Wireless Fidelity (WiFi), or Ultra Wideband (UWB). At present DECT seems to be the most widely used wireless communication protocol for this application, and thus in the following a DECT headset system will be used as an example.

Figure 2 illustrates an office environment or a call centre, i.e. a so-called high density installation, where a large number of headset systems, each one comprising a headset and a base station, will typically be used within a limited geographical area. This is possible because DECT as well as the other wireless communication protocols has a certain bandwidth allowing a given number of channels to be used simultaneously. In Europe the DECT frequency band is 1880 MHz - 1900 MHz, which allows the use of 10 carriers with 12 time slots to be used in each direction, i.e. up and down stream. Thus up to 120 channels can be provided in the European DECT spectrum, which means that up to 120 headset systems can be used simultaneously in the same area. In the US and Canada the DECT frequency band is 1920 MHz - 1930 MHz, which allows the use of 5 carriers and provides up to 60 channels. In Figure 2 ten headset systems 11, 12, 13, 14, 15, 16, 17, 18, 19 and 20 are shown for illustrational purposes, of which the two headset systems 13 and 19 are used for communication. Thus in this case two of the available channels are occupied. However, in some installations also the passive headset systems may occupy a channel.

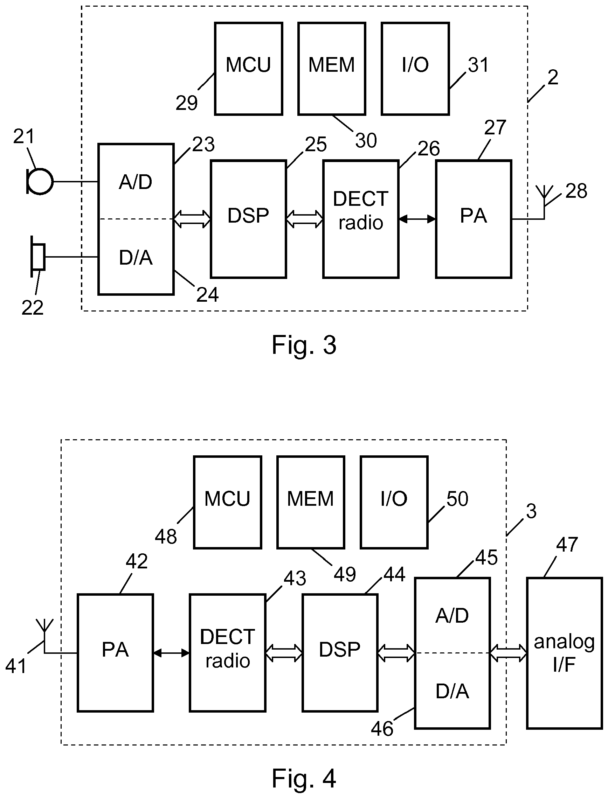

Figure 3 illustrates an example of a configuration of the headset 2. The headset 2 includes a microphone 21 and a loudspeaker 22. The microphone 21 is connected to an A/D-converter 23 that converts an analog voice signal received by the microphone 21 to digital signals that can be processed by the digital signal processor 25, and similarly the loudspeaker 22 is connected to a D/A-converter 24 that converts digital signals from the digital signal processor 25 to analog signals that can be reproduced by the loudspeaker 22. The digital signal processor 25 performs different tasks such as encoding/decoding (codec), noise reduction and echo control. The signal processor 25 is connected to a DECT radio circuit 26 (transceiver), which again is connected through a power amplifier 27 to the antenna 28. The headset 2 also comprises a microcontroller unit 29, memory 30 and input/output circuits 31 connected to e.g. push buttons and light emitting diodes.

Similarly, Figure 4 illustrates an example of a configuration of the base station 3. An antenna 41 for receiving radio signals emitted from the antenna 28 of the headset 2 and transmitting radio signals the other way is connected through a power amplifier 42 to a DECT radio circuit 43 (transceiver). Like the headset 2, the base station 3 also has a digital signal processor 44 for performing different tasks such as encoding/decoding (codec), noise reduction and echo control. The digital signal processor 44 may be connected via A/D-converter 45 and D/A-converter 46 to an analog interface 47 that may interface the base station to a telephone line. Alternatively, the digital signal processor 44 may be connected (e.g. via a USB interface) to a computer having a communication program such as Microsoft Office Communicator installed. The base station 3 also comprises a microcontroller unit 48, memory 49 and input/output circuits 50 connected to e.g. push buttons and light emitting diodes.

When a wireless connection is to be established between the headset 2 and the base station 3, one of the microcontroller units, i.e. either the microcontroller unit 29 in the headset 2 or the microcontroller unit 48 in the base station 3, checks by activating the receiver part of the corresponding DECT radio circuit which DECT channels are already occupied by other headset systems, DECT telephones or other DECT equipment in the area, and from this information it determines a channel that is available for use by this headset system. A radio connection between the headset and the base station is then established using this available channel.

As mentioned above, the number of available channels in DECT is limited, and the number is further reduced due to the increased use of wide band speech in e.g. Microsoft Office Communicator, since a higher bandwidth is needed for each channel. Thus in Europe the number of available DECT wideband channels is only 60, while in the US and Canada it is reduced to 30. Especially in such cases the number of available channels may not be sufficient for large office environments or call centres. Although some of the other wireless communication protocols, e.g. Bluetooth, may provide a somewhat higher number of channels, the number is still limited to a level that may not be enough for large office buildings or large call centres.

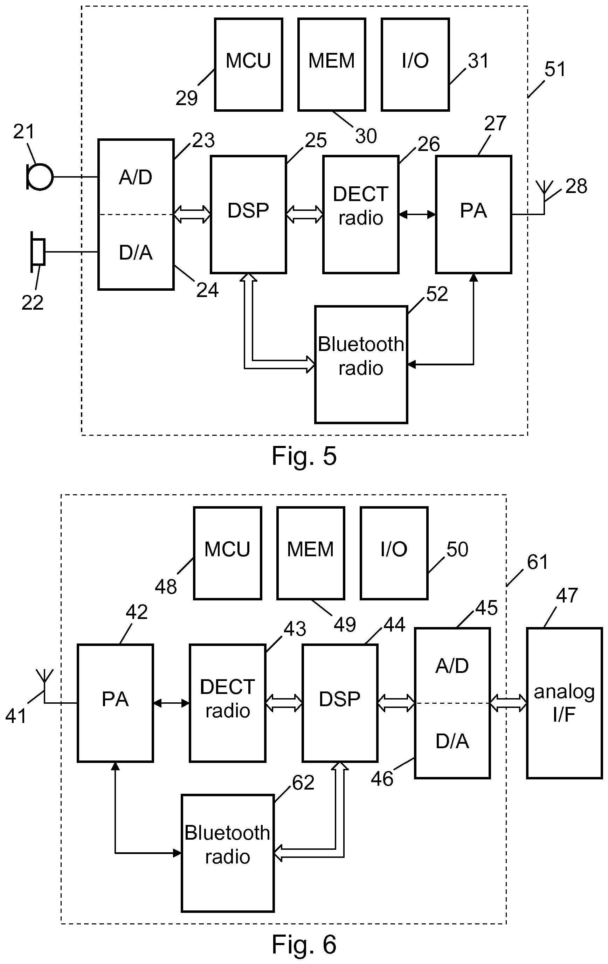

A solution to this problem is shown in Figures 5 and 6 illustrating a modified headset 51 and a modified base station 61. The headset 51 differs from the headset 2 of Figure 3 in that in addition to the DECT radio circuit 26 it also comprises a Bluetooth radio circuit 52, so that the headset can now communicate via Bluetooth as well as via DECT. The Bluetooth connection can be according to class 1, which ensures a range of up to 100 meters. The Bluetooth frequency range is 2400-2480 MHz. In Figure 5 the digital signal processor 25 is used for both the DECT branch and the Bluetooth branch of the headset, but it could also be possible that each one of the two braches has its own digital signal processor. Similarly, the power amplifier 27 and the antenna 28 are used for both branches, but it is also possible that each branch uses its own power amplifier and/or its own antenna.

Similarly, the base station 61 differs from the base station 3 in that it comprises a Bluetooth radio circuit 62 in addition to the DECT radio circuit 26, so that it can communicate with the headset via Bluetooth as well as via DECT. Also here the digital signal processor 44 as well as the power amplifier 42 and the antenna 41 are used for both the DECT branch and the Bluetooth branch of the base station, while it is also here possible to have these components separate for each branch.

As mentioned, the DECT branch and the Bluetooth branch of the base station as well as the headset can either use a common digital signal processor or two separate digital signal processors. Bluetooth high end chipsets today typically provide considerable digital signal processor resources. Thus it can be advantageous to use this processor as a common digital signal processor, which will allow the use of common codec for Bluetooth and DECT. Such codec could possibly also be able to take wideband DECT into a normal DECT timeslot, which would further increase the number of available channels.

When a wireless connection is to be established between the headset 51 and the base station 61, one of the microcontroller units, i.e. either the microcontroller unit 29 in the headset 51 or the microcontroller unit 48 in the base station 61, checks by activating the receiver part of the corresponding DECT radio circuit which DECT channels are already occupied by other headset systems or other DECT equipment in the area, and from this information it determines whether a DECT channel is available for use by this headset system. If this is the case, a radio connection between the headset and the base station is then established using this available DECT channel. However, if a DECT channel is not available, the microcontroller unit 29 or 48 switches to Bluetooth and establishes a radio connection between the headset and the base station using a Bluetooth channel. Typically, the microcontroller unit 48 in the base station will take care of this task, Instead of using one of the microcontroller units 29 or 48, it is also possible to allocate a separate microcontroller unit for this purpose.

By allowing the headset system to switch from DECT to Bluetooth when no DECT channels are available the number of available channels is increased considerably.

The switching between the two wireless communication protocols may also take place dynamically, i.e. during an already established connection. As an example, a user may move around in a building during a telephone conversation and thus arrive in an area where the use of the other protocol is more expedient.

In the example described above, the two wireless communication protocols used are DECT and Bluetooth, and the DECT channels are used first, while the Bluetooth channels are used when no DECT channels are available. However, it could also be the other way around, or other communication protocols than DECT and Bluetooth could be used instead of one or both of these. Some examples are Wireless Fidelity (WiFi) in the 2.4, 3.6 or 5 GHz frequency bands and Ultra Wideband (UWB) in the frequency range of 3.1 to 10.6 GHz.

When the headset system is configured to use two different wireless communication protocols, i.e. in this case DECT and Bluetooth, an extra level of security could also be added to the solution. The level of security of each link (DECT and Bluetooth) is already very high, but by taking advantage of having two technologies running in parallel, additional exchange of link keys could be implemented. Keys for improved DECT security could be sent over Bluetooth, and keys for improved Bluetooth security could be sent over DECT. This would make it very difficult to even consider ways of eavesdropping a call.

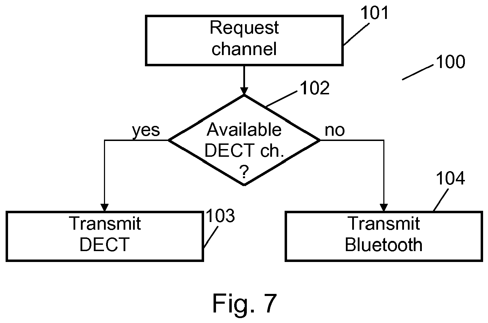

Figure 7 shows a flow chart 100 illustrating a method according to the solution described above. When a connection between a headset and a base station is needed, the headset system requests a channel in step 101. It is then checked in step 102 whether a DECT channel is available for this connection. As mentioned above, this can be done by checking which DECT channels are already used. If a DECT channel is still available, radio signals are then transmitted in step 103 between the headset and the base station according to the DECT protocol. However, if there are no DECT channels available, the headset switches to Bluetooth and radio signals are then transmitted in step 104 between the headset and the base station according to the Bluetooth protocol.

Although various embodiments of the present invention have been described and shown, the invention is not restricted thereto, but may also be embodied in other ways within the scope of the subject-matter defined in the following claims.

## Claims

1. A headset system comprising a headset (51) and a base station (61), wherein each of said headset (51) and base station (61) comprises a transceiver configured to transmit radio signals between said headset and said base station according to a first wireless communication protocol, wherein each of said headset (51) and base station (61) further comprises a transceiver configured to transmit radio signals between said headset and said base station according to a second wireless communication protocol,
**characterized in that** at least one of said headset (51) and said base station (61) further comprises selecting means (29; 48) configured to select one of said first and second wireless communication protocols for transmission of radio signals between said headset and said base station, and said selecting means (29; 48) is configured to select said first or second wireless communication protocol in dependence of available transmission capacity for transmission of radio signals according to said first and second wireless communication protocols, wherein the dependence of available transmission capacity is determined by activating the receiver part corresponding to the first or second wireless communication protocol and determining if a channel is available for use by the headset system.

2. A headset system according to claim 1, **characterized in that** said selecting means (29; 48) is configured to
• determine whether transmission capacity is available for transmission of radio signals between the headset (51) and the base station (61) according to said first wireless communication protocol;
• select, if such capacity is available, said first wireless communication protocol for transmission of radio signals between said headset and said base station; and
• select, if such capacity is not available, said second wireless communication protocol for transmission of radio signals between said headset and said base station.

3. A headset system according to any one of claims 1 to 2, **characterized in that** each of said first and second wireless communication protocols is selected from the group of wireless communication protocols comprising DECT, Bluetooth, WiFi and UWB.

4. A headset system according to claim 3, **characterized in that** said first wireless communication protocol is DECT, and said second wireless communication protocol is Bluetooth.

5. A headset system according to any one of claims 1 to 4, **characterized in that** at least one of said headset (51) and said base station (61) further comprises a digital signal processor (25; 44) configured to perform digital signal processing of signals to be transmitted according to said first wireless communication protocol as well as signals to be transmitted according to said second wireless communication protocol.

6. A method of transmitting radio signals between a headset (51) and a base station (61) according to a first and second wireless communication protocol, **characterized in that** the method comprises the steps of:
• determining (102) whether transmission capacity is available for transmission of radio signals between said headset and said base station according to the first wireless communication protocol, wherein available transmission capacity is determined by activating a receiver part corresponding to the first wireless communication protocol and determining if a channel is available for use by the headset system;
• transmitting (103), if such capacity is available, radio signals between said headset and said base station according to said first wireless communication protocol; and
• transmitting (104), if such capacity is not available, radio signals between said headset and said base station according to the second wireless communication protocol.

7. A method according to claim 6, **characterized in that** each of said first and second wireless communication protocols is selected from the group of wireless communication protocols comprising DECT, Bluetooth, WiFi and UWB.

8. A method according to claim 7, **characterized in that** said first wireless communication protocol is DECT, and said second wireless communication protocol is Bluetooth.

9. A computer program comprising program code means for performing all the method steps of any one of the claims 6 to 8 when said computer program is run on a computer.

10. A computer readable medium having stored thereon program code means for performing the method of any one of the claims 6 to 8 when said program code means is run on a computer.

## Patentansprüche

1. Headset-System, das ein Headset (51) und eine Basisstation (61) umfasst, wobei jedes des Headsets (51) und der Basisstation (61) einen Sender/Empfänger umfasst, welcher gemäß einem ersten drahtlosen Kommunikationsprotokoll zum Übertragen von Funksignalen zwischen dem Headset und der Basisstation ausgelegt ist, wobei jedes des Headsets (51) und der Basisstation (61) ferner einen Sender/Empfänger umfasst, welcher gemäß einem zweiten drahtlosen Kommunikationsprotokoll zum Übertragen von Funksignalen zwischen dem Headset und der Basisstation ausgelegt ist, **dadurch gekennzeichnet, dass** zumindest eines des Headsets (51) und der Basisstation (61) ferner Auswählmittel (29; 48) umfasst, das zum Auswählen eines des ersten und zweiten drahtlosen Kommunikationsprotokolls für die Übertragung von Funksignalen zwischen dem Headset und der Basisstation ausgelegt ist, und das Auswählmittel (29; 48) zum Auswählen des ersten oder zweiten drahtlosen Kommunikationsprotokolls in Abhängigkeit der verfügbaren Übertragungskapazität für die Übertragung von Funksignalen gemäß dem ersten und zweiten drahtlosen Kommunikationsprotokoll ausgelegt ist, wobei die Abhängigkeit der verfügbaren Übertragungskapazität durch das Aktivieren des Empfängerteils entsprechend dem ersten oder zweiten drahtlosen Kommunikationsprotokoll und das Bestimmen, ob ein Kanal für die Verwendung durch das Headset-System verfügbar ist, bestimmt wird.

2. Headset-System nach Anspruch 1, **dadurch gekennzeichnet, dass** das Auswählmittel (29; 48) dazu ausgelegt ist,
• zu bestimmen, ob die Übertragungskapazität für die Übertragung von Funksignalen zwischen dem Headset (51) und der Basisstation (61) gemäß dem ersten drahtlosen Kommunikationsprotokoll verfügbar ist;
• das erste drahtlose Kommunikationsprotokoll für die Übertragung von Funksignalen zwischen dem Headset und der Basisstation zu wählen, falls eine solche Kapazität verfügbar ist; und
• das zweite drahtlose Kommunikationsprotokoll für die Übertragung von Funksignalen zwischen dem Headset und der Basisstation zu wählen, falls eine solche Kapazität nicht verfügbar ist.

3. Headset-System nach einem der Ansprüche 1 bis 2, **dadurch gekennzeichnet, dass** jedes des ersten und zweiten drahtlosen Kommunikationsprotokolls aus der Gruppe von DECT, Bluetooth, WiFi und UWB umfassenden drahtlosen Kommunikationsprotokollen ausgewählt ist.

4. Headset-System nach Anspruch 3, **dadurch gekennzeichnet, dass** das erste drahtlose Kommunikationsprotokoll DECT ist, und das zweite drahtlose Kommunikationsprotokoll Bluetooth ist.

5. Headset-System nach einem der Ansprüche 1 bis 4, **dadurch gekennzeichnet, dass** zumindest eines des Headsets (51) und der Basisstation (61) ferner einen digitalen Signalprozessor (25; 44) umfasst, welcher zum Durchführen digitaler Signalverarbeitung von gemäß dem ersten drahtlosen Kommunikationsprotokoll zu übertragenden Signalen sowie von gemäß dem zweiten drahtlosen Kommunikationsprotokoll zu übertragenden Signalen ausgelegt ist.

6. Verfahren zum Übertragen von Funksignalen zwischen einem Headset (51) und einer Basisstation (61) gemäß einem ersten und zweiten drahtlosen Kommunikationsprotokoll,
**dadurch gekennzeichnet, dass** das Verfahren die folgenden Schritte umfasst:
• Bestimmen (102), ob die Übertragungskapazität für die Übertragung von Funksignalen zwischen dem Headset und der Basisstation gemäß dem ersten drahtlosen Kommunikationsprotokoll verfügbar ist, wobei die verfügbare Übertragungskapazität durch das Aktivieren eines Empfängerteils entsprechend dem ersten drahtlosen Kommunikationsprotokoll und das Bestimmen, ob ein Kanal für die Verwendung durch das Headset-System verfügbar ist, bestimmt wird;
• Übertragen (103) von Funksignalen zwischen dem Headset und der Basisstation gemäß dem ersten drahtlosen Kommunikationsprotokoll, falls eine solche Kapazität verfügbar ist; und
• Übertragen (104) von Funksignalen zwischen dem Headset und der Basisstation gemäß dem zweiten drahtlosen Kommunikationsprotokoll, falls eine solche Kapazität nicht verfügbar ist.

7. Verfahren nach Anspruch 6, **dadurch gekennzeichnet, dass** jedes des ersten und zweiten drahtlosen Kommunikationsprotokolls aus der Gruppe von DECT, Bluetooth, WiFi und UWB umfassenden drahtlosen Kommunikationsprotokollen ausgewählt ist.

8. Verfahren nach Anspruch 7 **dadurch gekennzeichnet, dass** das erste drahtlose Kommunikationsprotokoll DECT ist, und das zweite drahtlose Kommunikationsprotokoll Bluetooth ist.

9. Computerprogramm umfassend Programmcodemittel zum Durchführen aller Verfahrensschritte nach einem der Ansprüche 6 bis 8, wenn das Computerprogramm auf einem Computer läuft.

10. Computerlesbares Medium mit einem darauf gespeicherten Programmcodemittel zum Durchführen des Verfahrens nach einem der Ansprüche 6 bis 8, wenn das Programmcodemittel auf einem Computer läuft.

## Revendications

1. Système de casque comprenant un casque (51) et une station de base (61), chacun dudit casque (51) et de ladite station de base (61) comprenant un émetteur-récepteur configuré pour transmettre des signaux radio entre ledit casque et ladite station de base selon un premier protocole de communication sans fil, chacun dudit casque (51) et de ladite station de base (61) comprenant en outre un émetteur-récepteur configuré pour transmettre des signaux radio entre ledit casque et ladite station de base selon un deuxième protocole de communication sans fil,
**caractérisé en ce qu'**au moins l'un dudit casque (51) et de ladite station de base (61) en outre comprend un moyen de sélection (29; 48) configuré pour sélectionner l'un desdits premier et deuxième protocoles de communication sans fil pour la transmission de signaux radio entre ledit casque et ladite station de base, et ledit moyen de sélection (29; 48) est configuré pour sélectionner ledit premier ou deuxième protocole de communication sans fil en fonction de la capacité de transmission disponible pour la transmission de signaux radio selon lesdits premier et deuxième protocoles de communication sans fil, la dépendance de capacité de transmission disponible étant déterminée par l'activation de la partie réceptrice correspondant au premier ou deuxième protocole de communication sans fil et la détermination de savoir si un canal est disponible pour l'utilisation par le système de casque.

2. Système de casque selon la revendication 1, **caractérisé en ce que** ledit moyen de sélection (29; 48) est configuré pour
• déterminer si la capacité de transmission est disponible pour la transmission de signaux radio entre le casque (51) et la station de base (61) selon ledit premier protocole de communication sans fil ;
• sélectionner, si une telle capacité est disponible, ledit premier protocole de communication sans fil pour la transmission de signaux radio entre ledit casque et ladite station de base ; et
• sélectionner, si une telle capacité n'est pas disponible, ledit deuxième protocole de communication sans fil pour la transmission de signaux radio entre ledit casque et ladite station de base.

3. Système de casque selon l'une quelconque des revendications 1 à 2, **caractérisé en ce que** chacun desdits premier et deuxième protocoles de communication sans fil est sélectionné parmi le groupe de protocoles de communication sans fil comprenant DECT, Bluetooth, WiFi et UWB.

4. Système de casque selon la revendication 3, **caractérisé en ce que** ledit premier protocole de communication sans fil est DECT, et ledit deuxième protocole de communication sans fil est Bluetooth.

5. Système de casque selon l'une quelconque des revendications 1 à 4, **caractérisé en ce qu'**au moins l'un dudit casque (51) et de la station de base (61) comprend en outre un processeur de signaux numériques (25; 44) configuré pour effectuer le traitement numérique des signaux à transmettre selon ledit premier protocole de communication sans fil ainsi que des signaux à transmettre selon ledit deuxième protocole de communication sans fil.

6. Procédé de transmission de signaux radio entre un casque (51) et une station de base (61) selon un premier et deuxième protocole de communication sans fil,
**caractérisé en ce que** le procédé en outre comprend les étapes consistant à
• déterminer (102) si la capacité de transmission est disponible pour des signaux radio entre ledit casque et ladite station de base selon un premier protocole de communication sans fil, la capacité de transmission disponible étant déterminée par l'activation d'une partie réceptrice correspondant au premier protocole de communication sans fil et la détermination de savoir si un canal est disponible pour l'utilisation par le système de casque ;
• transmettre (103), si une telle capacité est disponible, des signaux radio entre ledit casque et ladite station de base selon ledit premier protocole de communication sans fil ; et
• transmettre (104), si une telle capacité n'est pas disponible, des signaux radio entre ledit casque et ladite station de base selon un deuxième protocole de communication sans fil.

7. Procédé selon la revendication 6, **caractérisé en ce que** chacun desdits premier et deuxième protocoles de communication sans fil est sélectionné parmi le groupe de protocoles de communication sans fil comprenant DECT, Bluetooth, WiFi et UWB.

8. Procédé selon la revendication 7, **caractérisé en ce que** ledit premier protocole de communication sans fil est DECT, et ledit deuxième protocole de communication sans fil est Bluetooth.

9. Programme d'ordinateur comprenant des moyens de code de programme pour exécuter toutes les étapes selon l'une quelconque des revendications 6 à 8, lorsque ledit programme informatique est exécuté sur un ordinateur.

10. Support lisible par ordinateur sur lequel est stocké des moyens de code de programme pour réaliser le procédé selon l'une quelconque des revendications 6 à 8 lorsque ledit moyen de code de programme est exécuté sur un ordinateur.
